# EUROPÄISCHE PATENTSCHRIFT

(11) **EP 4 285 035 B1**
(45) Veröffentlichungstag und Bekanntmachung des Hinweises auf die Patenterteilung: **28.05.2025**
(21) Anmeldenummer: 21823744.4
(22) Anmeldetag: 01.12.2021
(51) Int. Cl.: F16C 19/46, F16C 33/46, F16C 33/66

(54) **WÄLZLAGERANORDNUNG UND VERFAHREN ZUR HERSTELLUNG EINES TASCHENKÄFIGS**
ROLLING BEARING ARRANGEMENT AND METHOD FOR PRODUCING A POCKET CAGE
ENSEMBLE PALIER À ROULEMENT ET PROCÉDÉ DE FABRICATION D'UNE CAGE DE POCHE

(30) Priorität: 28.01.2021 DE 102021101933
(43) Veröffentlichungstag der Anmeldung: 06.12.2023
(73) Patentinhaber: Schaeffler Technologies AG & Co. KG, 91074 Herzogenaurach (DE)
(72) Erfinder: VOREC, Jozef, 90901 Skalica (SK)
(86) Internationale Anmeldenummer: PCT/DE2021/100953
(87) Internationale Veröffentlichungsnummer: WO 2022/161562

(56) Entgegenhaltungen:
- DE-B3- 102007 046 131
- DE-T2- 69 627 937
- DE-U- 1 694 407
- JP-A- 2000 352 423
- JP-A- H05 118 337

## Beschreibung

### Gebiet der Erfindung

Die Erfindung betrifft eine Wälzlageranordnung, umfassend ein Wälzlager mit einem Innenring, einem Außenring, Wälzkörpern und einem Käfig, wobei der Innenring eine Innenringlaufbahn aufweist und der Außenring eine Außenringlaufbahn aufweist, wobei die Wälzkörper zwischen Innenring und Außenring drehbar in dem Käfig voneinander beabstandet angeordnet sind, wobei die Wälzkörper auf der Innenringlaufbahn und der Außenringlaufbahn wälzen, wobei die Wälzkörper als Wälzkörperrollen ausgebildet sind und der Käfig als Taschenkäfig ausgebildet ist, der zwei koaxial angeordneten Taschenkäfigringe aufweist, welche mit einer Mehrzahl von Taschenkäfigaxialtrennstegen unter Bildung von Taschenöffnungen zur Aufnahme der Wälzkörper verbunden sind. Die Erfindung betrifft ferner ein Verfahren zur Herstellung eines Taschenkäfigs.

### Hintergrund der Erfindung

Wälzlager mit käfiggeführten Wälzkörpern sind hinlänglich aus dem Stand der Technik bekannt. Beispielhaft insbesondere für entsprechende Käfige seien die Druckschriften JP H05 118337 A, JP 2000 352 423 A, DE 16 94 407 U oder DE 696 27 937 T2 genannt. Sie können insbesondere dazu verwendet werden, Drehbewegungen mit möglichst geringen Reibungsverlusten zu ermöglichen. Wälzlager können insbesondere zur Fixierung und/oder Lagerung von Achsen und Wellen eingesetzt werden, wobei sie, je nach Bauform, radiale und/oder axiale Kräfte aufnehmen und gleichzeitig die Rotation der Welle oder der so auf einer Achse gelagerten Bauteile ermöglichen.

Hierzu sind zwischen einem Innenring und einem Außenring des Wälzlagers abrollende Wälzkörper angeordnet. Zwischen diesen drei Hauptkomponenten Innenring, Außenring und den Wälzkörpern tritt innerhalb des Wälzlagers in der Regel hauptsächlich Rollreibung auf. Da die Wälzkörper im Innen- und Außenring bevorzugt auf gehärteten Stahlflächen mit optimierter Schmierung abrollen können, ist die Rollreibung derartiger Lager relativ gering.

Die als nächstkommend angesehene DE 10 2007 046131 B3 offenbart ein Verfahren zur Herstellung eines Taschenkäfigs für ein Wälzlager mit den Schritten Bereitstellung einer Zylinderhülse mit einer inneren Mantelfläche, Aufstecken der Zylinderhülse auf eine Welle, so dass die innere Mantelfläche an der Welle anliegt, und Ausstanzen von Taschenöffnungen aus der Zylinderhülse, so dass ein Taschenkäfig ausgebildet wird.

Es besteht ein anhaltendes Bedürfnis daran, Wälzlager kostengünstig und mit hohen Losgrößen fertigen zu können.

### Aufgabe der Erfindung

Somit ist es die Aufgabe der Erfindung ein Wälzlager bereitzustellen, das einen Käfig aufweist, welcher eine fertigungstechnisch optimierte Ausgestaltung aufweist, insbesondere für einen Stanzprozess optimiert konstruiert ist. Es ist ferner die Aufgabe der Erfindung, ein optimiertes Verfahren zur Herstellung eines Käfigs für ein Wälzlager bereitzustellen.

### Beschreibung der Erfindung

Diese Aufgabe wird gelöst durch eine Wälzlageranordnung mit den in Anspruch 3 aufgeführten Merkmalen.

Der Vorteil dieser Ausgestaltung liegt darin begründet, dass diese Ausgestaltung der Taschenkäfigaxialtrennstege besonders geeignet ist zur Fertigung des Taschenkäfigs in Hochgeschwindigkeitsstanzprozessen, bei denen hohe Scherkräfte beim Ausstanzen der Taschenöffnungen auftreten können, was bei Konstruktionen, die von der hier vorgeschlagenen abweichen, zu unerwünschten plastischen Verformungen an den Taschenkäfigaxialtrennstegen führen kann. Dies ist insbesondere kritisch bei Käfigkonstruktionen, welche innenliegende Nuten an den Taschenkäfigaxialtrennstegen aufweisen, welche beispielsweise zur Schmiermittelführung innerhalb des Wälzlagers vorhanden sind. Mit der erfindungsgemäßen Ausgestaltung kann ein Käfig bereitgestellt werden, der die zur Schmierstoffführung zwischen Wälzkörper und Käfig notwendigen Nuten aufweist und sich gleichzeitig besonders ökonomisch und sicher fertigen lässt.

Zunächst werden die einzelnen Elemente des beanspruchten Erfindungsgegenstandes in der Reihenfolge ihrer Nennung im Anspruchssatz erläutert und nachfolgend besonders bevorzugte Ausgestaltungen des Erfindungsgegenstandes beschrieben.

Ein Wälzlager kann ein- oder mehrreihig ausgebildet sein.

Der Innenring kann insbesondere die das Wälzlager aufnehmende Welle mit dem Wälzlager bzw. den Wälzkörpern verbinden. Dabei kann insbesondere die äußere Mantelfläche der Welle mit der inneren Mantelfläche des Innenrings verbunden sein, wobei auf der dieser Mantelfläche gegenüberliegenden Innenringlaufbahn die Wälzkörper des Wälzlagers wälzen. Der Innenring kann aus einem metallischen und/oder keramischen Werkstoff gebildet sein. Es ist grundsätzlich denkbar, den Innenring einteilig oder mehrteilig, insbesondere zweiteilig auszubilden.

Der Außenring kann insbesondere die das Wälzlager umgebende Lageraufnahme mit dem Wälzlager bzw. den Wälzkörpern verbinden. Dabei kann insbesondere die dem Wälzlager zugewandte Seite der Lageraufnahme mit der äußeren Mantelfläche des Außenrings verbunden sein, wobei auf der dieser Mantelfläche gegenüberliegenden Außenringlaufbahn die Wälzkörper des Wälzlagers wälzen. Der Außenring kann aus einem metallischen und/oder keramischen Werkstoff gebildet sein. Es ist grundsätzlich denkbar, den Außenring einteilig oder mehrteilig, insbesondere zweiteilig auszubilden.

Die Wälzkörper haben abhängig von der Wälzlagerbauart die Form einer Rolle. Sie wälzen sich auf den Laufbahnen des Wälzlagers ab und haben die Aufgabe, die auf ein Radialwälzlager wirkende Kraft vom Außenring auf den Innenring und umgekehrt zu übertragen. Rollenförmige Wälzkörper werden auch als Rollenwälzkörper und kugelförmige Wälzkörper als Lagerkugel bezeichnet. Rollenförmige Wälzkörper können beispielsweise ausgewählt sein aus der Gruppe der symmetrischen Pendelrollen, der asymmetrischen Pendelrollen, der Zylinderrollen, der Nadelrollen und/oder der Kegelrollen.

Im Zusammenhang mit der Erfindung ist es besonders bevorzugt, dass die Wälzkörper als Nadelrollen ausgebildet sind.

Eine erfindungsgemäße Wälzlageranordnung weist einen als Taschenkäfig ausgeführten Käfig auf, der die Wälzkörper führt. Der Käfig ist so ausgebildet, dass die Wälzkörperrollen voneinander beabstandet werden, damit beispielsweise die Reibung und Wärmeentwicklung der Wälzkörper möglichst geringgehalten wird. Ferner hält der Käfig die Rollenwälzkörper in einem festen Abstand beim Abwälzen zueinander, wodurch eine gleichmäßige Lastverteilung erzielt werden kann.

Der Käfig kann bevorzugt einstückig, jedoch auch grundsätzlich mehrstückig ausgeführt sein.

Die Wälzkörper können innerhalb des Wälzlagers insbesondere auf der Innenringlaufbahn des Innenrings abwälzen. Hierzu kann vorteilhafterweise die Oberfläche der Innenringlaufbahn entsprechend abriebfest ausgebildet sein, beispielsweise auch durch ein entsprechendes Oberflächenbehandlungsverfahren und/oder durch Aufbringen einer entsprechenden zusätzlichen Materialschicht.

Die Innenringlaufbahn kann eben oder profiliert ausgebildet sein. Eine profilierte Ausgestaltung der Innenringlaufbahn kann beispielsweise zur Führung der Wälzkörper auf der Innenringlaufbahn dienen. Eine ebene Ausformung der Innenringlaufbahn kann hingegen beispielsweise eine gewisse axiale Verschiebbarkeit der Wälzkörper auf der Innenringlaufbahn erlauben.

Die Wälzkörper können innerhalb des Wälzlagers insbesondere auf der Außenringlaufbahn des Außenrings abwälzen. Hierzu kann vorteilhafterweise die Oberfläche der Außenringlaufbahn entsprechend abriebfest ausgebildet sein, beispielsweise auch durch ein entsprechendes Oberflächenbehandlungsverfahren und/oder durch Aufbringen einer entsprechenden zusätzlichen Materialschicht.

Die Außenringlaufbahn kann eben oder profiliert ausgebildet sein. Eine profilierte Ausgestaltung der Außenringlaufbahn kann beispielsweise zur Führung der Wälzkörper auf der Außenringlaufbahn dienen. Eine ebene Ausformung der Außenringlaufbahn kann hingegen beispielsweise eine gewisse axiale Verschiebbarkeit der Wälzkörper auf der Außenringlaufbahn erlauben.

Gemäß einer bevorzugten Ausgestaltung der Erfindung kann es vorteilhaft sein, dass die mittlere Anlagefläche mittig bezogen auf die axiale Erstreckung der Taschenkäfigaxialtrennstege an diesen angeordnet ist, so dass sich während der Fertigung auf die Taschenkäfigaxialtrennstege einwirkende Scherkräfte möglichst gleichmäßig in axialer Erstreckung über die Taschenkäfigaxialtrennstege verteilen. Ferner wird durch die mittige Anordnung eine Stützstelle in den Taschenkäfigaxialtrennstegen bereitgestellt, bei der üblicherweise beim Ausstanzen der Taschenöffnungen die größten Biegespannungen in den Taschenkäfigaxialtrennstegen auftreten können.

Es kann des Weiteren vorteilhaft sein, dass die Nuten jeweils eine Öffnungsweite zwischen 2% bis 15% der axialen Erstreckung der Taschenkäfigaxialtrennstege aufweisen, so dass eine hinreichend große Abstütz- und Anlagefläche beim Ausstanzen der Taschenöffnungen während des Fertigungsprozesses des Käfigs bereitgestellt werden kann.

In einer Weiterentwicklung der Erfindung kann es ferner bevorzugt sein, dass die Nuten eine identische Öffnungsweite aufweisen, was sich hinsichtlich einer symmetrischen Spannungsverteilung in den Taschenkäfigaxialtrennstegen während des Fertigungsprozesses als vorteilhaft erwiesen hat.

Weiterhin kann es von Vorteil sein, dass die Nuten eine voneinander abweichende Axialschnittkontur besitzen, wodurch das Füllvolumen für einen Schmierstoff individuell für jede der Nuten angepasst werden kann. Es ist jedoch auch möglich und aus fertigungstechnischer Sicht vorteilhaft, dass die Nuten identische Axialschnittkonturen aufweisen.

Gemäß einer weiteren vorteilhaften Ausbildung der Erfindung kann es bevorzugt sein, dass die Axialschnittkontur wenigstens einer der Nuten, bevorzugt aller Nuten, eine Kreisform aufweist.

Gemäß einer bevorzugten Ausgestaltung der Erfindung kann es vorteilhaft sein, dass die Axialschnittkontur wenigstens einer der Nuten, bevorzugt aller Nuten, einen Kreisbogenabschnitt, einen sich an den Kreisbogenabschnitt anschließenden planparallel zur Anlagefläche verlaufenden Erstreckungsabschnitt sowie einen sich an den Erstreckungsabschnitt anschließenden Rampenabschnitt aufweist. Hierdurch kann ein vergleichsweise großes Füllvolumen in den Nuten für einen Schmierstoff und gleichzeitig eine hinreichend große Sicherheit vor unerwünschten plastischen Verformungen an den Taschenkäfigaxialtrennstegen während des Fertigungsprozesses bereitgestellt werden.

In diesem Zusammenhang hat es sich als besonders vorteilhaft herausgestellt, dass die Rampenabschnitte zweier axial benachbarter Nuten aufeinander zu weisend ausgerichtet sind.

Ferner ist es besonders bevorzugt, dass die radiale Erstreckung der Taschenkäfigaxialtrennstege identisch ist. Es ist in diesem Zusammenhang ebenfalls höchst bevorzugt, dass die Taschenkäfigringe eine radiale Erstreckung aufweisen, die der radialen Erstreckung der Taschenkäfigaxialtrennstege entspricht.

Die Aufgabe der Erfindung wird gelöst durch ein Verfahren zur Herstellung eines Taschenkäfigs für ein Wälzlager, umfassend die in Anspruch 1 aufgeführten Schritte.

Es kann in diesem Zusammenhang von Vorteil sein, dass die Welle wenigstens vier über ihren Umfang verteilte Stanztaschen aufweist, in die ein Stanzwerkzeug zur Ausbildung einer Käfigtasche eingreifen kann, wodurch eine besonders kurze Fertigungszeit für den Taschenkäfig realisierbar ist.

### Kurze Beschreibung der Zeichnungen

Eine bevorzugte Ausführungsform der Erfindung wird nachfolgend unter Bezugnahme auf die beigefügten Zeichnungen ohne Beschränkung des allgemeinen Erfindungsgedankens näher erläutert. Dabei zeigen:
- Figur 1: ein Wälzlager in einer Axialschnittansicht,
- Figur 2: ein Taschenkäfig in einer perspektivischen Darstellung,
- Figur 3: eine erste Ausführungsform eines Taschenkäfigaxialtrennstegs des Taschenkäfigs in einer Axialschnittansicht,
- Figur 4: eine zweite Ausführungsform eines Taschenkäfigaxialtrennstegs des Taschenkäfigs in einer Axialschnittansicht,
- Figur 5: eine Zylinderhülse in einer perspektivischen Darstellung,
- Figur 6: das Einbringen von Nuten an der inneren Mantelfläche der Zylinderhülse in einer schematischen Darstellung,
- Figur 7: eine Zylinderhülse mit innenliegenden Nuten in einer perspektivischen Darstellung,
- Figur 8: das Einbringen der Taschenöffnungen in die Zylinderhülse mittels eines Stanzprozesses in einer perspektivischen Darstellung, und
- Figur 9: ein Ablaufdiagram eines Verfahrens zur Herstellung eines Taschenkäfigs.

### Ausführliche Beschreibung der Zeichnungen

Die Zeichnungen sind lediglich schematischer Natur und dienen ausschließlich dem Verständnis der Erfindung. Gleiche Elemente sind mit denselben Bezugszeichen versehen. Auch können die unterschiedlichen Merkmale der verschiedenen Ausführungsbeispiele innerhalb des technisch machbaren frei miteinander kombiniert werden.

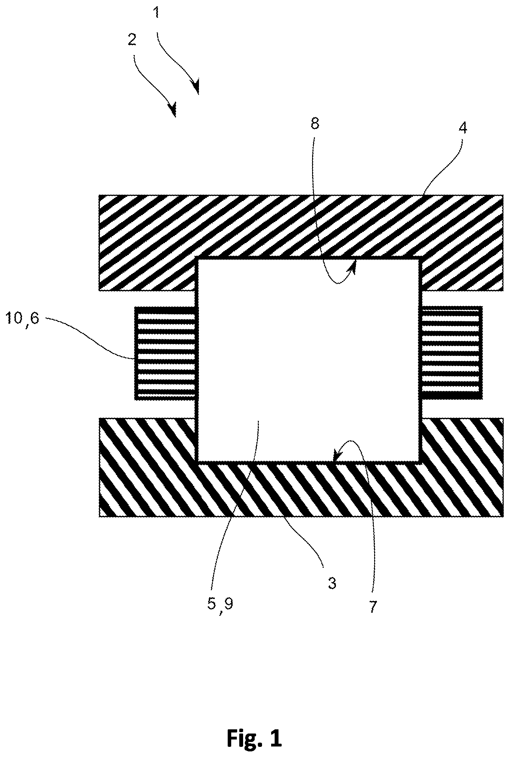

Figur 1 zeigt eine Wälzlageranordnung 1, umfassend ein Wälzlager 2 mit einem Innenring 3, einem Außenring 4, Wälzkörpern 5 und einem Käfig 6. Der Innenring 3 weist eine Innenringlaufbahn 7 und der Außenring 4 eine Außenringlaufbahn 8 auf, wobei die Wälzkörper 5 zwischen Innenring 3 und Außenring 4 drehbar im Käfig 6 voneinander beabstandet angeordnet sind. Die Wälzkörper 5 wälzen auf der Innenringlaufbahn 7 und der Außenringlaufbahn 8 und sind in dem gezeigten Ausführungsbeispiel als Wälzkörperrollen 9 ausgebildet.

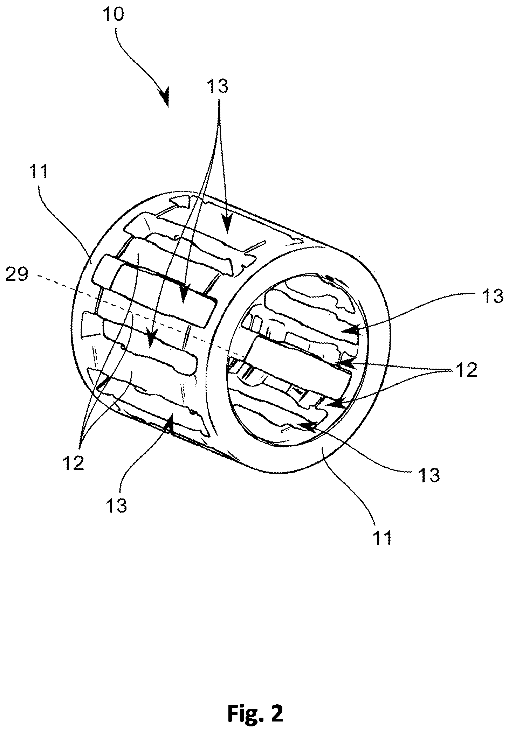

Entsprechend ist der Käfig 6 als ein aus einem metallischen Werkstoff gebildeter Taschenkäfig 10 konfiguriert, was in der Figur 2 gezeigt ist. Der Taschenkäfig 10 besitzt zwei koaxial angeordnete identische Taschenkäfigringe 11, welche mit einer Mehrzahl von Taschenkäfigaxialtrennstegen 12 unter Bildung von Taschenöffnungen 13 zur Aufnahme der Wälzkörper 5 verbunden sind. Die Taschenkäfigringe 11 und die Taschenkäfigaxialtrennstege 12 sind monolithisch miteinander ausgeformt.

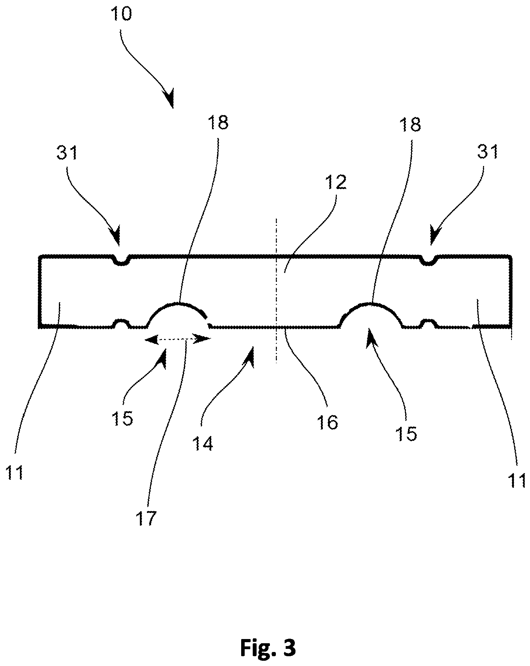

Eine erste Ausführungsform der Taschenkäfigaxialtrennstege 12 ist in der Figur 3 gezeigt und wird nachstehend näher erläutert. Die Taschenkäfigaxialtrennstege 12 weisen auf der radial nach Innen weisenden Seite eine im Wesentlichen ebene Anlagefläche 14 mit jeweils zwei in Umfangsrichtung des Taschenkäfigs 10 verlaufenden Nuten 15 auf. Die mittlere Anlagefläche 16, welche zwischen den zwei Nuten 15 ausgebildet ist, besitzt eine axiale Erstreckung, die von 3% bis 40% der axialen Erstreckung eines der Taschenkäfigaxialtrennstege 12 entspricht. Zwischen den Taschenkäfigaxialtrennstegen 12 und den Taschenkäfigringen 11 sind beidseits der Taschenkäfigaxialtrennstege 12 jeweils eine Taillierung 31 an den Taschenkäfigaxialtrennstegen 12 ausgebildet, um neben einer Führung von Schmierstoff durch die Taillierung 31 insbesondere auch eine federelastische Wirkung und/oder Spannungsführung in den Taschenkäfigaxialtrennstegen 12 zu bewirken.

Die mittlere Anlagefläche 16 ist mittig bezogen auf die axiale Erstreckung der Taschenkäfigaxialtrennstege 12 an diesen angeordnet. Dies ist in der Figur 2 durch die mit einer Strich-Punkt-Linie angedeutete Mittelachse des Taschenkäfigaxialtrennstegs 12 angedeutet. Man erkennt gut die spiegelsymmetrische Ausbildung des Taschenkäfigaxialtrennstegs 12 entlang dieser Mittelachse.

Die Nuten 15 weisen ferner identische Öffnungsweiten 17 zwischen 2% bis 15% der axialen Erstreckung der Taschenkäfigaxialtrennstege 12 auf. Die Axialschnittkontur 18 jeder der Nuten 15 besitzt in der gezeigten Ausführungsform eine Kreisform.

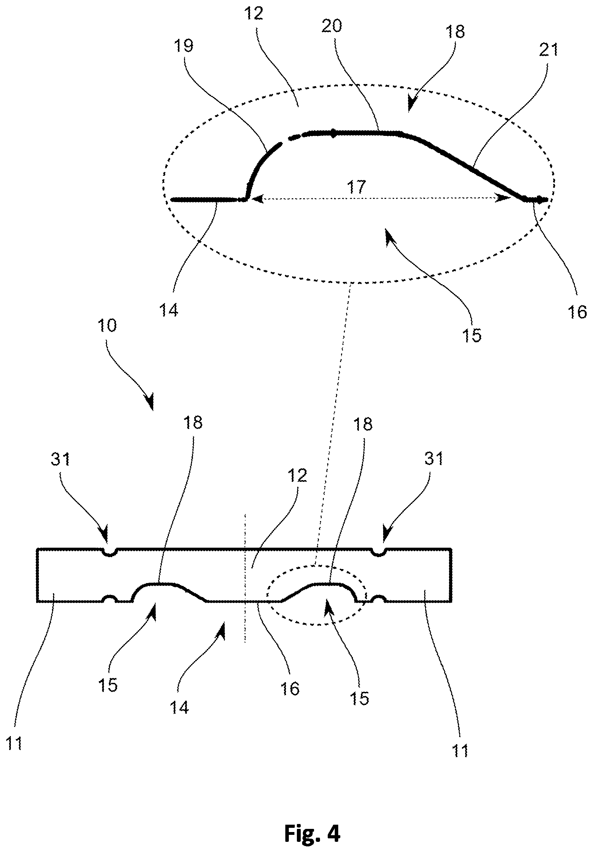

Figur 4 zeigt eine von der Figur 3 abweichende Ausgestaltung der Axialschnittkonturen 18 der Nuten 15. Die Axialschnittkontur 18 der Nuten 15 gemäß dem Ausführungsbeispiel der Figur 3 besitzt einen Kreisbogenabschnitt 19, einen sich an den Kreisbogenabschnitt 19 anschließenden planparallel zur Anlagefläche 14 verlaufenden Erstreckungsabschnitt 20 sowie einen sich an den Erstreckungsabschnitt 20 anschließenden Rampenabschnitt 21. Die Rampenabschnitte 21 zweier axial benachbarter Nuten 15 sind aufeinander zu weisend ausgerichtet. Die Nuten 15 weisen auch hier identische Öffnungsweiten 17 zwischen 2-15% der axialen Erstreckung der Taschenkäfigaxialtrennstege 12 auf.

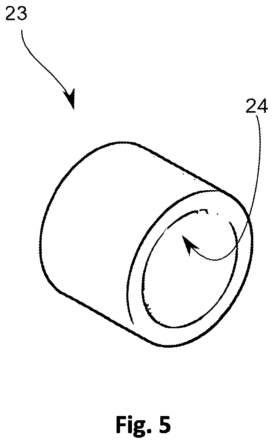

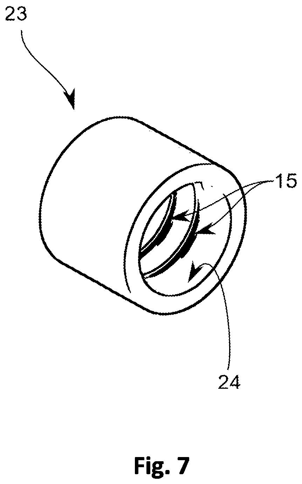

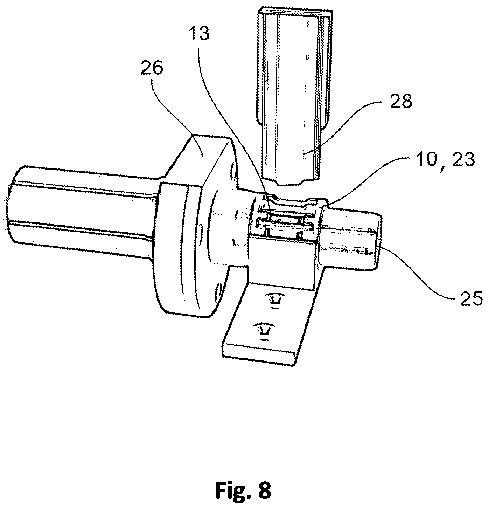

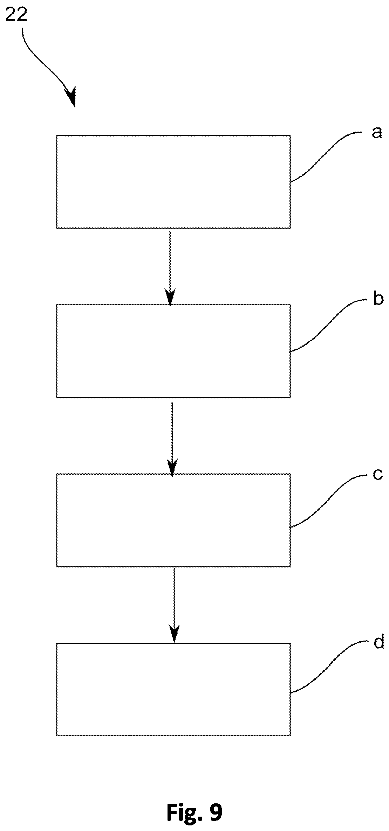

Ein Verfahren 22 zur Herstellung eines Taschenkäfigs 10 für ein Wälzlager 2 wird anhand der Figuren 5 bis 9 näher erläutert:
In einem ersten Verfahrensschritt a) erfolgt die Bereitstellung einer metallischen Zylinderhülse 23 mit einer inneren Mantelfläche 24, wie sie in der Figur 5 gezeigt ist. Es ist ersichtlich, dass die innere Mantelfläche 24 des Halbzeugs die spätere radial innere Anlagefläche 14 des Taschenkäfigs 10 ist. Die Wandstärke der Zylinderhülse 23 entspricht der späteren radialen Erstreckung der Taschenkäfigaxialtrennstege 12 sowie der Taschenkäfigringe 11.

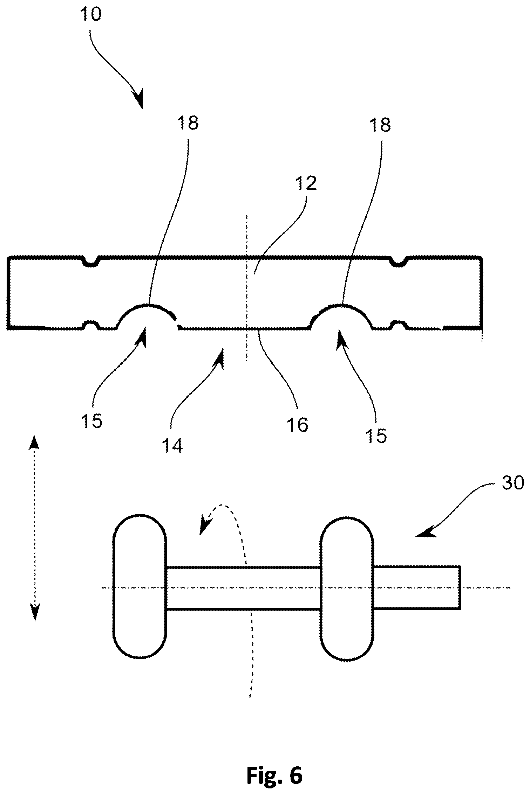

Nachfolgend werden in die Zylinderhülse 23 in einem Verfahrensschritt b) zwei Nuten 15 in die inneren Mantelfläche 24 eingebracht, was in der Figur 6 gezeigt ist. Das Einbringen der Nuten 15 erfolgt mittels eines Nutwerkzeugs 30, das in Radialrichtung von innen nach außen gegen die innere Mantelfläche 24 gepresst wird. Durch ein Abrollen des Nutwerkzeugs 30 gegenüber der inneren Mantelfläche der Zylinderhülse 23 können dann die Nuten 15 insbesondere spanlos ausgebildet werden. Dabei besitzen die formgebenden Geometrien des Nutwerkzeugs 30 eine Außenkontur, die der späteren Axialschnittkontur 18 der Nuten 15 entspricht.

Die so vorbereitete Zylinderhülse 23 wird hiernach in einem Verfahrensschritt c) auf eine Welle 25 aufgesteckt, so dass die inneren Mantelfläche 24 an der Welle 25 anliegt. Abschließend erfolgt in dem mit d) bezeichneten Verfahrensschritt das Ausstanzen der Taschenöffnungen 13 aus der Zylinderhülse 23, so dass ein Taschenkäfig 10 ausgebildet wird, wie er in den Figuren 2 bis 4 gezeigt ist. Dabei senkt sich das Stanzwerkzeug 28 in Richtung der Welle 25 ab und stanzt eine entsprechende Taschenöffnung 13 aus der Zylinderhülse 10 aus. Die Welle 25 kann über den Wellenantrieb 26 gedreht werden, wobei der Wellenantrieb 26 bevorzugt einen Schrittmotor umfasst. Die Welle 25, die auch als Matrize bezeichnet werden kann, besitzt wenigstens vier über ihren Umfang verteilte Stanztaschen, in die das Stanzwerkzeug 28 zur Ausbildung einer Taschenöffnung 13 eingreifen kann.

Die Zylinderhülse 23 kann insbesondere dank der als Stützfläche ausgebildeten mittleren Anlagefläche 16 der Taschenkäfigaxialtrennstege 12 das Stanzen auf einer Stanzmaschine, wie beispielsweise einer XAV-Maschine, ermöglichen. Durch die zwei axial beabstandeten Nuten 15 verbleibt mit der mittleren Anlagefläche 16 also eine Stützfläche, um einen Taschenkäfigaxialtrennsteg 12 beim Stanzen abzustützen.

Die Erfindung ist nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung 'erste' und 'zweite' Merkmale definieren, so dient diese Bezeichnung der Unterscheidung zweier gleichartiger Merkmale, ohne eine Rangfolge festzulegen.

### Bezugszeichenliste

- 1: Wälzlageranordnung
- 2: Wälzlager
- 3: Innenring
- 4: Außenring
- 5: Wälzkörper
- 6: Käfig
- 7: Innenringlaufbahn
- 8: Außenringlaufbahn
- 9: Wälzkörperrollen
- 10: Taschenkäfig
- 11: Taschenkäfigringen
- 12: Taschenkäfigaxialtrennstegen
- 13: Taschenöffnungen
- 14: Anlagefläche
- 15: Nuten
- 16: mittlere Anlagefläche
- 17: Öffnungsweite
- 18: Axialschnittkontur
- 19: Kreisbogenabschnitt
- 20: Erstreckungsabschnitt
- 21: Rampenabschnitt
- 22: Verfahren
- 23: Zylinderhülse
- 24: inneren Mantelfläche
- 25: Welle
- 26: Wellenantrieb
- 27: (nicht belegt)
- 28: Stanzwerkzeug
- 29: Schnittebene
- 30: Nutwerkzeug
- 31: Taillierung

## Patentansprüche

1. Verfahren (22) zur Herstellung eines Taschenkäfigs (10) für ein Wälzlager (2), mit folgenden Schritten:
a) Bereitstellung einer Zylinderhülse (23) mit einer inneren Mantelfläche (24),
b) Einbringen von wenigstens zwei Nuten (15) in die innere Mantelfläche (24),
c) Aufstecken der Zylinderhülse (23) auf eine Welle (25), so dass die innere Mantelfläche (24) an der Welle (25) anliegt,
d) Ausstanzen von Taschenöffnungen (13) aus der Zylinderhülse (23), so dass ein Taschenkäfig (10) ausgebildet wird,
wobei eine zwischen den zwei Nuten (15) ausgebildete mittlere Anlagefläche (16), um einen Taschenkäfigaxialtrennsteg (12) beim Stanzen abzustützen, eine axiale Erstreckung aufweist, die zwischen 3% und 40% der axialen Erstreckung eines der Taschenkäfigaxialtrennstege (12) liegt.

2. Verfahren, nach Anspruch 1, **dadurch gekennzeichnet, dass** die Welle (25) wenigstens vier über ihren Umfang verteilte Stanztaschen aufweist, in die ein Stanzwerkzeug (28) zur Ausbildung einer Taschenöffnung (13) eingreifen kann.

3. Wälzlageranordnung (1), umfassend ein Wälzlager (2) mit einem Innenring (3), einem Außenring (4), Wälzkörpern (5) und einem Käfig (6), wobei der Käfig (6) durch das Verfahren gemäß einem der vorhergehenden Ansprüche hergestellt ist, wobei der Innenring (3) eine Innenringlaufbahn (7) aufweist und der Außenring (4) eine Außenringlaufbahn (8) aufweist, wobei die Wälzkörper (5) zwischen Innenring (3) und Außenring (4) drehbar in dem Käfig (6) voneinander beabstandet angeordnet sind, wobei die Wälzkörper (5) auf der Innenringlaufbahn (7) und der Außenringlaufbahn (8) wälzen, wobei die Wälzkörper (5) als Wälzkörperrollen (9) ausgebildet sind und der Käfig (6) als Taschenkäfig (10) ausgebildet ist, der zwei koaxial angeordnete Taschenkäfigringe (11) aufweist, welche mit einer Mehrzahl von Taschenkäfigaxialtrennstegen (12) unter Bildung von Taschenöffnungen (13) zur Aufnahme der Wälzkörper (5) verbunden sind, **dadurch gekennzeichnet, dass** die Taschenkäfigaxialtrennstege (12) auf der radial nach Innen weisenden Seite eine im Wesentlichen ebene Anlagefläche (14) mit jeweils wenigstens zwei in Umfangsrichtung des Taschenkäfigs (10) verlaufenden Nuten (15) aufweist, wobei die mittlere Anlagefläche (16), welche zwischen den zwei Nuten (15) ausgebildet ist, eine axiale Erstreckung aufweist, die zwischen 3% bis 40% der axialen Erstreckung eines der Taschenkäfigaxialtrennstege (12) entspricht.

4. Wälzlageranordnung (1) nach Anspruch 3, **dadurch gekennzeichnet, dass** die mittlere Anlagefläche (16) mittig bezogen auf die axiale Erstreckung der Taschenkäfigaxialtrennstege (12) an diesen angeordnet ist.

5. Wälzlageranordnung (1) nach einem der vorherigen Ansprüche 3 oder 4, **dadurch gekennzeichnet, dass** die Nuten (15) jeweils eine Öffnungsweite (17) zwischen 2% bis 15% der axialen Erstreckung der Taschenkäfigaxialtrennstege (12) aufweisen.

6. Wälzlageranordnung (1) nach einem der vorherigen Ansprüche 3 bis 5, **dadurch gekennzeichnet, dass** die Nuten (15) eine identische Öffnungsweite (17) aufweisen.

7. Wälzlageranordnung (1) nach einem der vorherigen Ansprüche 3 bis 6, **dadurch gekennzeichnet, dass** die Nuten (15) eine voneinander abweichende Axialschnittkontur (18) besitzen.

8. Wälzlageranordnung (1) nach Anspruch 7, **dadurch gekennzeichnet, dass** die Axialschnittkontur (18) wenigstens einer der Nuten (15) eine Kreisform aufweist.

9. Wälzlageranordnung (1) nach Anspruch 7, **dadurch gekennzeichnet, dass** die Axialschnittkontur (18) wenigstens einer der Nuten (15) einen Kreisbogenabschnitt (19), einen sich an den Kreisbogenabschnitt (19) anschließenden planparallel zur Anlagefläche (14) verlaufenden Erstreckungsabschnitt (20) sowie einen sich an den Erstreckungsabschnitt (20) anschließenden Rampenabschnitt (21) aufweist.

10. Wälzlageranordnung (1) nach Anspruch 9, **dadurch gekennzeichnet, dass** die Rampenabschnitte (21) zweier axial benachbarter Nuten (15) aufeinander zu weisend ausgerichtet sind.

## Claims

1. A method (22) for producing a pocket cage (10) for a rolling bearing (2), having the following steps:
a) providing a cylinder sleeve (23) having an inner lateral surface (24),
b) introducing at least two grooves (15) into the inner lateral surface (24),
c) placing the cylinder sleeve (23) on a shaft (25) so that the inner lateral surface (24) rests against the shaft (25),
d) punching out pocket openings (13) from the cylinder sleeve (23) so that a pocket cage (10) is formed,
wherein a central contact surface (16) formed between the two grooves (15) in order to support a pocket cage axial separating web (12) during punching has an axial extent which lies between 3% and 40% of the axial extent of one of the pocket cage axial separating webs (12).

2. The method according to claim 1, **characterized in that** the shaft (25) has at least four punching pockets distributed over its circumference, into which a punching tool (28) can engage for forming a pocket opening (13).

3. A rolling bearing arrangement (1), comprising a rolling bearing (2) having an inner ring (3), an outer ring (4), rolling elements (5) and a cage (6), wherein the cage (6) is produced by the method according to any one of the preceding claims, wherein the inner ring (3) has an inner ring raceway (7) and the outer ring (4) has an outer ring raceway (8), wherein the rolling elements (5) are arranged between the inner ring (3) and the outer ring (4) at a distance from one another in the cage (6) so that they can rotate, wherein the rolling elements (5) roll on the inner ring raceway (7) and the outer ring raceway (8), wherein the rolling elements (5) are designed as rolling element rollers (9) and the cage (6) is designed as a pocket cage (10) having two coaxially arranged pocket cage rings (11) which are connected to a plurality of pocket cage axial separating webs (12) forming pocket openings (13) for receiving the rolling elements (5), **characterized in that** the pocket cage axial separating webs (12) have, on the radially inward-facing side, a substantially flat contact surface (14) with at least two grooves (15) running in the circumferential direction of the pocket cage (10), wherein the central contact surface (16), which is formed between the two grooves (15), has an axial extent which corresponds to between 3% and 40% of the axial extent of one of the pocket cage axial separating webs (12).

4. The rolling bearing arrangement (1) according to claim 3, **characterized in that** the central contact surface (16) is arranged centrally on the pocket cage axial separating webs (12) with respect to the axial extent thereof.

5. The rolling bearing arrangement (1) according to any one of the preceding claims 3 or 4, **characterized in that** the grooves (15) each have an opening width (17) between 2% and 15% of the axial extent of the pocket cage axial separating webs (12).

6. The rolling bearing arrangement (1) according to any one of the preceding claims 3 to 5, **characterized in that** the grooves (15) have an identical opening width (17).

7. The rolling bearing arrangement (1) according to any one of the preceding claims 3 to 6, **characterized in that** the grooves (15) have differing axial cutting contours (18).

8. The rolling bearing arrangement (1) according to claim 7, **characterized in that** the axial cutting contour (18) of at least one of the grooves (15) has a circular shape.

9. The rolling bearing arrangement (1) according to claim 7, **characterized in that** the axial cutting contour (18) of at least one of the grooves (15) has a circular arc section (19), an extent section (20) adjoining the circular arc section (19) and extending plane-parallel to the contact surface (14), and a ramp section (21) adjoining the extent section (20).

10. The rolling bearing arrangement (1) according to claim 9, **characterized in that** the ramp sections (21) of two axially adjacent grooves (15) are aligned towards each other.

## Revendications

1. Procédé (22) de fabrication d'une cage de poche (10) pour un palier à roulement (2) comportant les étapes suivantes consistant à :
a) fournir un manchon cylindrique (23) comportant une surface d'enveloppe intérieure (24),
b) introduire au moins deux rainures (15) dans la surface d'enveloppe intérieure (24),
c) placer le manchon cylindrique (23) sur un arbre (25) de sorte que la surface d'enveloppe intérieure (24) vient en appui contre l'arbre (25),
d) poinçonner des ouvertures de poche (13) dans le manchon cylindrique (23) de façon à former une cage de poche (10),
dans lequel une surface de contact centrale (16) formée entre les deux rainures (15) afin de supporter une entretoise de séparation axiale (12) de cage de poche pendant le poinçonnage présente une étendue axiale qui se situe entre 3 % et 40 % de l'étendue axiale de l'une des entretoises de séparation axiale (12) de cage de poche.

2. Procédé selon la revendication 1, **caractérisé en ce que** l'arbre (25) présente au moins quatre poches de poinçonnage réparties sur sa circonférence, dans lesquelles un outil de poinçonnage (28) peut venir en prise pour former une ouverture de poche (13).

3. Agencement de palier à roulement (1) comprenant un palier à roulement (2) comportant une bague intérieure (3), une bague extérieure (4), des corps roulants (5) et une cage (6), dans lequel la cage (6) est fabriquée au moyen du procédé selon l'une quelconque des revendications précédentes, dans lequel la bague intérieure (3) présente un chemin de roulement intérieur (7) et la bague extérieure (4) présente un chemin de roulement extérieur (8), dans lequel les corps roulants (5) sont agencés entre la bague intérieure (3) et la bague extérieure (4) à distance les uns des autres de façon à pouvoir tourner dans la cage (6), dans lequel les corps roulants (5) roulent sur le chemin de roulement intérieur (7) et sur le chemin de roulement extérieur (8), dans lequel les corps roulants (5) sont conçus comme des rouleaux (9) de corps roulants et la cage (6) est conçue comme une cage de poche (10) qui présente deux bagues (11) de cage de poche agencées coaxialement qui sont reliées à une pluralité d'entretoises de séparation axiale (12) de cage de poche pour former des ouvertures de poche (13) destinées à recevoir les corps roulants (5), **caractérisé en ce que** les entretoises de séparation axiale (12) de cage de poche présentent, sur le côté orienté radialement vers l'intérieur, une surface de contact (14) sensiblement plane avec respectivement au moins deux rainures (15) s'étendant dans la direction circonférentielle de la cage de poche (10), dans lequel la surface de contact centrale (16), qui est formée entre les deux rainures (15), présente une étendue axiale qui représente entre 3 % et 40 % de l'étendue axiale de l'une des entretoises de séparation axiale (12) de cage de poche.

4. Agencement de palier à roulement (1) selon la revendication 3, **caractérisé en ce que** la surface de contact centrale (16) est agencée de manière centrale sur les entretoises de séparation axiale (12) de cage de poche par rapport à l'étendue axiale de celle-ci.

5. Agencement de palier à roulement (1) selon l'une quelconque des revendications précédentes 3 ou 4, **caractérisé en ce que** les rainures (15) présentent respectivement une largeur d'ouverture (17) comprise entre 2 % et 15 % de l'étendue axiale des entretoises de séparation axiale (12) de cage de poche.

6. Agencement de palier à roulement (1) selon l'une quelconque des revendications précédentes 3 à 5, **caractérisé en ce que** les rainures (15) présentent des largeurs d'ouverture (17) identiques.

7. Agencement de palier à roulement (1) selon l'une quelconque des revendications précédentes 3 à 6, **caractérisé en ce que** les rainures (15) possèdent un contour de section axiale (18) différent l'une de l'autre.

8. Agencement de palier à roulement (1) selon la revendication 7, **caractérisé en ce que** le contour de section axiale (18) d'au moins une des rainures (15) présente une forme circulaire.

9. Agencement de palier à roulement (1) selon la revendication 7, **caractérisé en ce que** le contour de section axiale (18) d'au moins une des rainures (15) présente une section d'arc de cercle (19), une section d'étendue (20) adjacente à la section d'arc de cercle (19) et s'étendant parallèlement au plan de la surface de contact (14), et une section de rampe (21) adjacente à la section d'étendue (20).

10. Agencement de palier à roulement (1) selon la revendication 9, **caractérisé en ce que** les sections de rampe (21) de deux rainures (15) axialement adjacentes sont orientées l'une vers l'autre.
